# EUROPEAN PATENT APPLICATION

(11) **EP 3 333 711 A1**
(43) Date of publication of application: **13.06.2018**
(21) Application number: 17020319.4
(22) Date of filing: 26.07.2017
(51) Int. Cl.: G06F 11/36

(54) **CASE-BASED AUTOMATED EMAIL TESTING**

(30) Priority: 09.12.2016 US 201615374076
(71) Applicant: Cyara Solutions Pty Ltd, Hawthorn, Victoria 3122 (AU)
(72) Inventor: Sansom, Gavin, Lisarow, New South Wales 2250 (AU); Willshire, Geoff, Greenslopes, Queensland 4120 (AU)
(74) Representative: Humphrey-Evans, Edward John

(57) **Abstract**

A system for case-based automated email testing, comprising a test case management server that produces test case configurations comprising email message information and execution configuration, and configured to operate an administration interface to receive user interaction and direct the operation of the test case management server, and configured to direct the operation of a plurality of email servers accessible via the network based at least in part on a test case configuration, and configured to compare at least a plurality of email messages against at least a portion of the email message information of a test case configuration.

## Description

### Field of the Art

The disclosure relates to the field of contact center operations, and more particularly to the field of testing for methods for e-mail communication systems.

### Discussion of the State of the Art

In the field of contact center operations, traditionally communication between agents and customers is performed via voice-based systems such as traditional telephony or voice over Internet protocol (VoIP) systems. However, more centers are beginning to accommodate additional, text-based communications such as email commonly found in the art, to better serve customers who may not have access to or desire to utilize a voice connection. A common example of this would be a customer browsing through an online catalogue on a company's website. In such a scenario, a customer might have a question about a product, and may send an email to a customer service account, allowing customers to communicate directly with agents while still browsing the online catalog and from the convenience of their computer. This allows more convenient and speedy communications, without the need to navigate a telephony-based interactive voice interactive voice recognition (IVR) system to reach an agent or waiting in long queues for an agent to become available. It also allows more flexible communications, such as a customer who may be viewing an online catalogue from an Internet café or similar public location, where they may not have access to a telephone or may not desire for their conversations to be overheard by others.

There exist in the art testing methods for voice communications, but such methods may not translate well to email-based systems. Furthermore, while there are some email testing systems implemented in the art currently, such systems require the interaction of a testing agent to operate, which introduces new problems such as additional expense for the time and labor involved in testing, human error factor which may influence reliability of testing protocols, and various inconsistencies associated with human operation.

What is needed is a flexible and scalable automated testing solution for email-based communications, that utilizes test cases to configure and execute email testing of email sending and receipt, and that produces meaningful test reports for review.

### SUMMARY OF THE INVENTION

Accordingly, the inventor has conceived and reduced to practice, in a preferred embodiment of the invention, a system and method for case-based automated email testing.

The invention comprises a system that enables case-based configuration of email testing that bundles multiple configuration parameters and settings into a "test case", enabling convenient storage and retrieval of testing configuration without having to re-enter information and without the risk of losing any details. The invention also provides a method for case-based email testing that enables time- and interval-based testing using stored test cases, and that compares received email message information against test case configuration to examine the results of operation and determine whether received messages match expected results.

According to a preferred embodiment of the invention, a system for case-based automated email testing, comprising a test case management server comprising at least a plurality of programming instructions stored in a memory and operating on a processor of a network-connected computing device and configured to produce a plurality of test case configurations, each test case configuration comprising at least a plurality of email message information and an execution configuration, and configured to operate an administration interface configured to receive user interaction via the network and configured to direct the operation of the test case management server based at least in part on the received interaction, and configured to direct the operation of a plurality of email servers accessible via the network based at least in part on a test case configuration, and configured to compare at least a plurality of email messages against at least a portion of the email message information of a test case configuration, is disclosed.

According to another preferred embodiment of the invention, a method for case-based automated email testing, comprising the steps of producing, using a test case management server comprising at least a plurality of programming instructions stored in a memory and operating on a processor of a network-connected computing device and configured to produce a plurality of test case configurations, each test case configuration comprising at least a plurality of email message information and an execution configuration, and configured to operate an administration interface configured to receive user interaction via the network and configured to direct the operation of the test case management server based at least in part on the received interaction, and configured to direct the operation of a plurality of email servers accessible via the network based at least in part on a test case configuration, and configured to compare at least a plurality of email messages against at least a portion of the email message information of a test case configuration, a test case configuration; directing the operation of a plurality of email servers based at least in part on the test case configuration; comparing a plurality of email messages against at least a portion of the email message information of a test case configuration; and storing the results of comparison for future reference, is disclosed.

### BRIEF DESCRIPTION OF THE DRAWING FIGURES

The accompanying drawings illustrate several embodiments of the invention and, together with the description, serve to explain the principles of the invention according to the embodiments. It will be appreciated by one skilled in the art that the particular embodiments illustrated in the drawings are merely exemplary, and are not to be considered as limiting of the scope of the invention or the claims herein in any way.
**Fig. 1** is a block diagram illustrating an exemplary system architecture for case-based automated email testing, according to a preferred embodiment of the invention.
**Fig. 2** is a flow diagram illustrating an exemplary method for creating and saving an email test case, according to a preferred embodiment of the invention.
**Fig. 3** is a flow diagram illustrating an exemplary method for case-based email testing, according to a preferred embodiment of the invention.
**Fig. 4** is a block diagram illustrating an exemplary hardware architecture of a computing device used in an embodiment of the invention.
**Fig. 5** is a block diagram illustrating an exemplary logical architecture for a client device, according to an embodiment of the invention.
**Fig. 6** is a block diagram showing an exemplary architectural arrangement of clients, servers, and external services, according to an embodiment of the invention.
**Fig. 7** is another block diagram illustrating an exemplary hardware architecture of a computing device used in various embodiments of the invention.

### DETAILED DESCRIPTION

One or more different inventions may be described in the present application. Further, for one or more of the inventions described herein, numerous alternative embodiments may be described; it should be appreciated that these are presented for illustrative purposes only and are not limiting of the inventions contained herein or the claims presented herein in any way. One or more of the inventions may be widely applicable to numerous embodiments, as may be readily apparent from the disclosure. In general, embodiments are described in sufficient detail to enable those skilled in the art to practice one or more of the inventions, and it should be appreciated that other embodiments may be utilized and that structural, logical, software, electrical and other changes may be made without departing from the scope of the particular inventions. Accordingly, one skilled in the art will recognize that one or more of the inventions may be practiced with various modifications and alterations. Particular features of one or more of the inventions described herein may be described with reference to one or more particular embodiments or figures that form a part of the present disclosure, and in which are shown, by way of illustration, specific embodiments of one or more of the inventions. It should be appreciated, however, that such features are not limited to usage in the one or more particular embodiments or figures with reference to which they are described. The present disclosure is neither a literal description of all embodiments of one or more of the inventions nor a listing of features of one or more of the inventions that must be present in all embodiments.

Headings of sections provided in this patent application and the title of this patent application are for convenience only, and are not to be taken as limiting the disclosure in any way.

Devices that are in communication with each other need not be in continuous communication with each other, unless expressly specified otherwise. In addition, devices that are in communication with each other may communicate directly or indirectly through one or more communication means or intermediaries, logical or physical.

A description of an embodiment with several components in communication with each other does not imply that all such components are required. To the contrary, a variety of optional components may be described to illustrate a wide variety of possible embodiments of one or more of the inventions and in order to more fully illustrate one or more aspects of the inventions. Similarly, although process steps, method steps, algorithms or the like may be described in a sequential order, such processes, methods and algorithms may generally be configured to work in alternate orders, unless specifically stated to the contrary. In other words, any sequence or order of steps that may be described in this patent application does not, in and of itself, indicate a requirement that the steps be performed in that order. The steps of described processes may be performed in any order practical. Further, some steps may be performed simultaneously despite being described or implied as occurring non-simultaneously (e.g., because one step is described after the other step). Moreover, the illustration of a process by its depiction in a drawing does not imply that the illustrated process is exclusive of other variations and modifications thereto, does not imply that the illustrated process or any of its steps are necessary to one or more of the invention(s), and does not imply that the illustrated process is preferred. Also, steps are generally described once per embodiment, but this does not mean they must occur once, or that they may only occur once each time a process, method, or algorithm is carried out or executed. Some steps may be omitted in some embodiments or some occurrences, or some steps may be executed more than once in a given embodiment or occurrence.

When a single device or article is described herein, it will be readily apparent that more than one device or article may be used in place of a single device or article. Similarly, where more than one device or article is described herein, it will be readily apparent that a single device or article may be used in place of the more than one device or article.

The functionality or the features of a device may be alternatively embodied by one or more other devices that are not explicitly described as having such functionality or features. Thus, other embodiments of one or more of the inventions need not include the device itself.

Techniques and mechanisms described or referenced herein will sometimes be described in singular form for clarity. However, it should be appreciated that particular embodiments may include multiple iterations of a technique or multiple instantiations of a mechanism unless noted otherwise. Process descriptions or blocks in figures should be understood as representing modules, segments, or portions of code which include one or more executable instructions for implementing specific logical functions or steps in the process. Alternate implementations are included within the scope of embodiments of the present invention in which, for example, functions may be executed out of order from that shown or discussed, including substantially concurrently or in reverse order, depending on the functionality involved, as would be understood by those having ordinary skill in the art.

### Conceptual Architecture

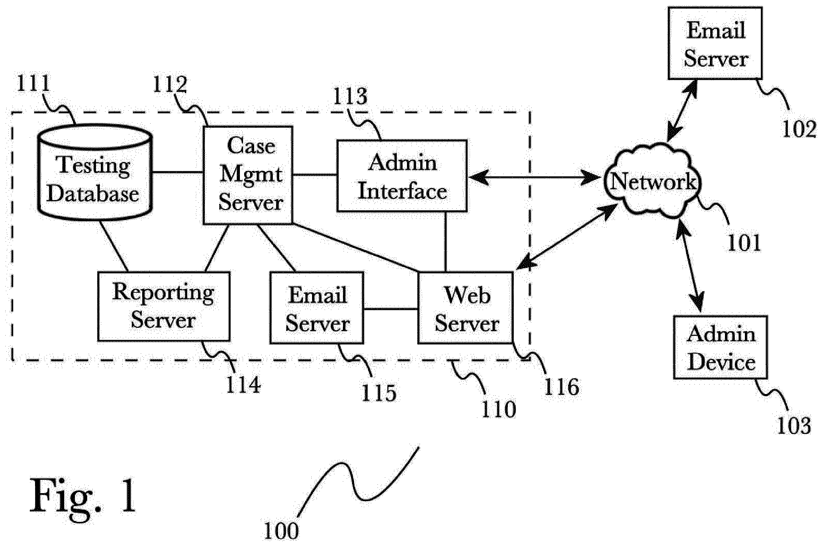

**Fig. 1** is a block diagram illustrating an exemplary system architecture **100** for case-based automated email testing, according to a preferred embodiment of the invention. According to the embodiment, a case-based email testing system **110** comprises a testing database **111** that stores and provides case- and test-related information such as test case configuration and execution results, a case management server **112** that creates, stores, retrieves, and executes test cases, and that operates an administration interface **113** that comprises an interactive interface for configuring and directing email test cases via a network **101,** for example from an administrator's computing device **103** such as a personal computer or mobile device. In this manner, an administrator may configure and execute test cases remotely and may monitor the operation or results of test case execution. Test case configuration may comprise a variety of email information such as (for example) including text information for message fields (such as the "subject" and "body" fields commonly used in email messages), "to" and "from" email addresses that may be used to verify the operation of specific email addresses or the routing of messages to and from those addresses, specific email server information such as a server to be used for sending a message or a server to be targeted for message receipt, network information such as specific connections, addresses, or bandwidth to be used during test case execution, timing information such as a specific minimum or maximum time to respond to a request or for overall execution of a test case or a "pulse" interval to determine test execution frequency and timing, or other message, system, or case-specific information. In this manner, the configuration and execution of a test case may be managed as precisely as needed to adequately test the desired features or components, and may be stored and retrieved as a complete test case for future use without having to repeat configuration and without the risk of any details being lost.

A reporting server **114** may be used to monitor test case execution and produce reports from execution results, for example including email message fields (such as sender address, recipient addresses, header, body, and other email data fields), test case execution time (for example, tracking min/max time thresholds during test execution), what email systems were tested, or other data that may be useful for future review. Test case reports may be stored in testing database **111** and presented for review via an administration interface **113.** Email server **115** may be used to send and receive email messages as directed by case management server **112,** and may optionally be the same email server used in contact center operations (that is, the email server responsible for sending and receiving messages between agents and customers) or may be a separate email server used for testing purposes, such as to test the effects of a particular server or message configuration prior to implementing the configuration on production systems. Web server **116** may operate an interactive interface accessible using a web browser application via network **101,** for example to present test case reports or an administration interface **113.**

According to some arrangements, more than one email server may be utilized, such as (for example) to send an email message from email server **115** to an external email server **102** operated by a remote host such as an email service provider or a private email server (for example, operated by an administrator or other user), as well as to enable the testing of multiple email servers for redundancy, as is often utilized in corporate environments to prevent downtime should any single email server experience difficulties.

### Detailed Description of Exemplary Embodiments

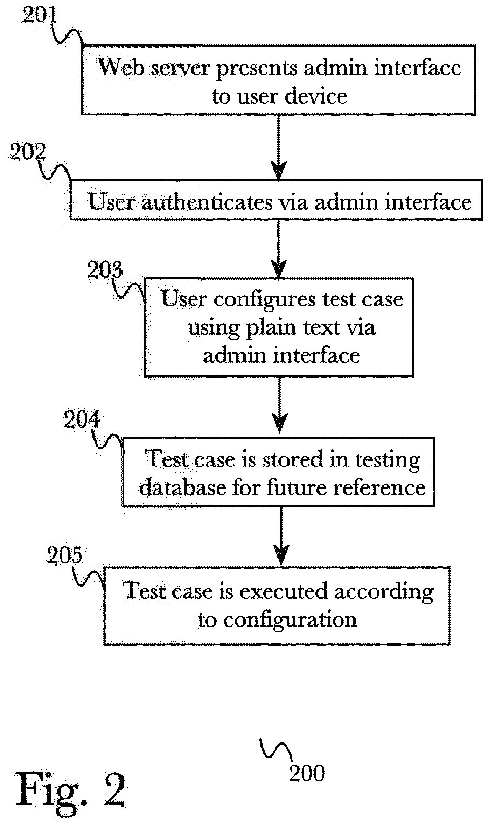

**Fig. 2** is a flow diagram illustrating an exemplary method **200** for creating and saving an email test case, according to a preferred embodiment of the invention. In an initial step **201,** a user may access an administration interface **113** via their device (for example, using a web browser on a personal computer or mobile device), and may authenticate in a next step **202** so they can interact as an administrator. In a next step **203,** the authenticated user may configure a new test case using plain text, facilitating an easy-to-use means for designing email test cases without the need for specialized training or advanced programming knowledge. For example, administration interface **113** may present a number of prompts or fields to configure specific features of an email test case, such as to fill out "to" and "from" fields for messages sent during execution, or to configure monitoring or reporting settings for a reporting server **114** to track execution of the test case. In a next case **204,** the user may save the new test case and it is stored in testing database **111** for future reference, and in a next step **205** the saved test case may be retrieved and executed according to the configuration (for example, if the test case is configured to execute at a specific time or in response to a trigger such as a change in email server **115** configuration, as well as time-based execution parameters such as using response time thresholds to determine the success or failure of a test step). In some arrangements, a user may be able to manually execute a test case, such as for one-time testing of a specific feature or configuration.

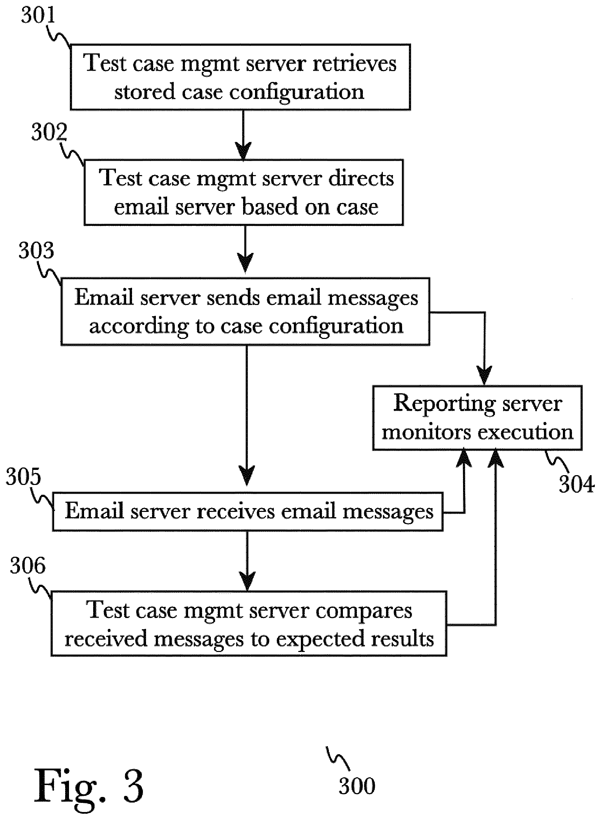

**Fig. 3** is a flow diagram illustrating an exemplary method **300** for case-based email testing, according to a preferred embodiment of the invention. In an initial step **301,** a test case management server **112** may retrieve a stored test case configuration for execution from a testing database **111,** for example configured synthetic email information for generating emails during testing, or stored testing parameters. In next step **302,** test case management server **112** may direct a plurality of email servers **115** based on the loaded case configuration, for example to send email messages with specific information or configuration, such as using specific email addresses or servers for sending or to check specific email servers or addresses for receipt. In a next step **303,** an email server **115** may send a plurality of email messages according to the loaded case configuration, and operation may be monitored and logged by a reporting server **114** in a reporting step **304.** In this manner, a number of synthetic emails may be produced and sent via standard communication channels during testing, wherein synthetic emails are sent for normal handling wherein they may be received at the destination, where they may then be classified and routed according to the destination's handling configuration. Synthetic emails may be routed separately from actual customer interaction emails, for example to be sent to synthetic agent workstations that may then perform automated handling and response according to configured test execution information. In a next step **305,** an email server **115** may receive a plurality of email messages (optionally messages sent as part of a test case, or messages received that were not generated by a test case, for example to test receipt-only functionality using incoming email messages), and received messages may be provided **306** to test case management server **112** and compared against anticipated results according to the loaded test case configuration. For example, if email messages are received that were sent according to a test case configuration, specific message information may be anticipated such as "to" and "from" fields or text content within various information fields of the message, and when a message is received it may be compared against this predicted result to examine the execution of the test case and the operation of systems used during execution. Additionally, this comparison may be used to determine if a particular email message is part of a test case, and, if so, which specific test case as multiple test cases may be executed or pending during a given span of time. Reporting server **114** may continue to monitor and log operation **304** and produce a report for a test case or a system that was tested, that may then be stored for future reference. For example, multiple test cases with varying configurations may be executed to thoroughly test a particular email server or network connection, and the execution of these test cases may be logged as a testing report on the operation of the system(s) in question, optionally in addition to a plurality of testing reports for the specific test cases that were executed. In this manner, email testing comprises an end-to-end testing operation that comprises each step of an email interaction from the creation of an initial email, through each step of email routing and handling, and a response from the destination.

### Hardware Architecture

Generally, the techniques disclosed herein may be implemented on hardware or a combination of software and hardware. For example, they may be implemented in an operating system kernel, in a separate user process, in a library package bound into network applications, on a specially constructed machine, on an application-specific integrated circuit (ASIC), or on a network interface card.

Software/hardware hybrid implementations of at least some of the embodiments disclosed herein may be implemented on a programmable network-resident machine (which should be understood to include intermittently connected network-aware machines) selectively activated or reconfigured by a computer program stored in memory. Such network devices may have multiple network interfaces that may be configured or designed to utilize different types of network communication protocols. A general architecture for some of these machines may be described herein in order to illustrate one or more exemplary means by which a given unit of functionality may be implemented. According to specific embodiments, at least some of the features or functionalities of the various embodiments disclosed herein may be implemented on one or more general-purpose computers associated with one or more networks, such as for example an end-user computer system, a client computer, a network server or other server system, a mobile computing device (e.g., tablet computing device, mobile phone, smartphone, laptop, or other appropriate computing device), a consumer electronic device, a music player, or any other suitable electronic device, router, switch, or other suitable device, or any combination thereof. In at least some embodiments, at least some of the features or functionalities of the various embodiments disclosed herein may be implemented in one or more virtualized computing environments (e.g., network computing clouds, virtual machines hosted on one or more physical computing machines, or other appropriate virtual environments).

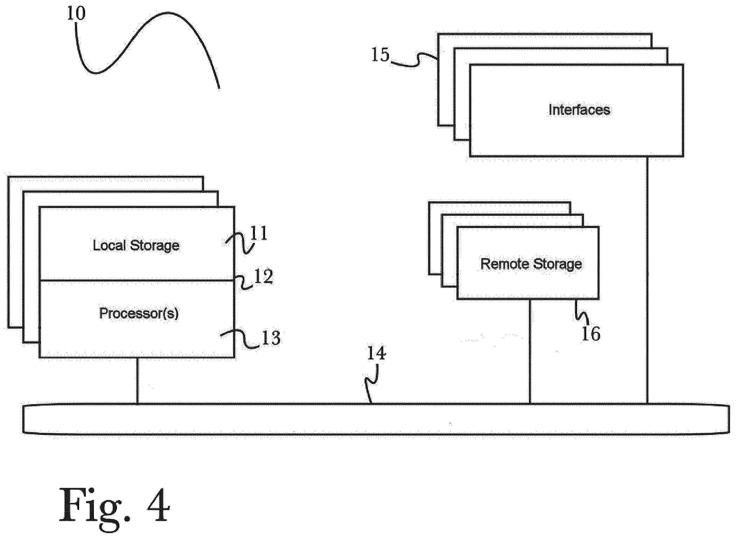

Referring now to **Fig. 4****,** there is shown a block diagram depicting an exemplary computing device **10** suitable for implementing at least a portion of the features or functionalities disclosed herein. Computing device **10** may be, for example, any one of the computing machines listed in the previous paragraph, or indeed any other electronic device capable of executing software- or hardware-based instructions according to one or more programs stored in memory. Computing device **10** may be configured to communicate with a plurality of other computing devices, such as clients or servers, over communications networks such as a wide area network a metropolitan area network, a local area network, a wireless network, the Internet, or any other network, using known protocols for such communication, whether wireless or wired.

In one embodiment, computing device **10** includes one or more central processing units (CPU) **12,** one or more interfaces **15,** and one or more busses **14** (such as a peripheral component interconnect (PCI) bus). When acting under the control of appropriate software or firmware, CPU **12** may be responsible for implementing specific functions associated with the functions of a specifically configured computing device or machine. For example, in at least one embodiment, a computing device **10** may be configured or designed to function as a server system utilizing CPU **12,** local memory **11** and/or remote memory **16,** and interface(s) **15.** In at least one embodiment, CPU **12** may be caused to perform one or more of the different types of functions and/or operations under the control of software modules or components, which for example, may include an operating system and any appropriate applications software, drivers, and the like.

CPU **12** may include one or more processors **13** such as, for example, a processor from one of the Intel, ARM, Qualcomm, and AMD families of microprocessors. In some embodiments, processors **13** may include specially designed hardware such as application-specific integrated circuits (ASICs), electrically erasable programmable read-only memories (EEPROMs), field-programmable gate arrays (FPGAs), and so forth, for controlling operations of computing device **10.** In a specific embodiment, a local memory **11** (such as non-volatile random access memory (RAM) and/or read-only memory (ROM), including for example one or more levels of cached memory) may also form part of CPU **12.** However, there are many different ways in which memory may be coupled to system **10.** Memory **11** may be used for a variety of purposes such as, for example, caching and/or storing data, programming instructions, and the like. It should be further appreciated that CPU **12** may be one of a variety of system-on-a-chip (SOC) type hardware that may include additional hardware such as memory or graphics processing chips, such as a QUALCOMM SNAPDRAGON™ or SAMSUNG EXYNOS™ CPU as are becoming increasingly common in the art, such as for use in mobile devices or integrated devices.

As used herein, the term "processor" is not limited merely to those integrated circuits referred to in the art as a processor, a mobile processor, or a microprocessor, but broadly refers to a microcontroller, a microcomputer, a programmable logic controller, an application-specific integrated circuit, and any other programmable circuit.

In one embodiment, interfaces **15** are provided as network interface cards (NICs). Generally, NICs control the sending and receiving of data packets over a computer network; other types of interfaces **15** may for example support other peripherals used with computing device **10.** Among the interfaces that may be provided are Ethernet interfaces, frame relay interfaces, cable interfaces, DSL interfaces, token ring interfaces, graphics interfaces, and the like. In addition, various types of interfaces may be provided such as, for example, universal serial bus (USB), Serial, Ethernet, FIREWIRE™, THUNDERBOLT™, PCI, parallel, radio frequency (RF), BLUETOOTH™, near-field communications (e.g., using near-field magnetics), 802.11 (WiFi), frame relay, TCP/IP, ISDN, fast Ethernet interfaces, Gigabit Ethernet interfaces, Serial ATA (SATA) or external SATA (ESATA) interfaces, high-definition multimedia interface (HDMI), digital visual interface (DVI), analog or digital audio interfaces, asynchronous transfer mode (ATM) interfaces, high-speed serial interface (HSSI) interfaces, Point of Sale (POS) interfaces, fiber data distributed interfaces (FDDIs), and the like. Generally, such interfaces **15** may include physical ports appropriate for communication with appropriate media. In some cases, they may also include an independent processor (such as a dedicated audio or video processor, as is common in the art for high-fidelity A/V hardware interfaces) and, in some instances, volatile and/or non-volatile memory (e.g., RAM).

Although the system shown in **Fig. 4** illustrates one specific architecture for a computing device **10** for implementing one or more of the inventions described herein, it is by no means the only device architecture on which at least a portion of the features and techniques described herein may be implemented. For example, architectures having one or any number of processors **13** may be used, and such processors **13** may be present in a single device or distributed among any number of devices. In one embodiment, a single processor **13** handles communications as well as routing computations, while in other embodiments a separate dedicated communications processor may be provided. In various embodiments, different types of features or functionalities may be implemented in a system according to the invention that includes a client device (such as a tablet device or smartphone running client software) and server systems (such as a server system described in more detail below).

Regardless of network device configuration, the system of the present invention may employ one or more memories or memory modules (such as, for example, remote memory block **16** and local memory **11**) configured to store data, program instructions for the general-purpose network operations, or other information relating to the functionality of the embodiments described herein (or any combinations of the above). Program instructions may control execution of or comprise an operating system and/or one or more applications, for example. Memory **16** or memories **11, 16** may also be configured to store data structures, configuration data, encryption data, historical system operations information, or any other specific or generic non-program information described herein.

Because such information and program instructions may be employed to implement one or more systems or methods described herein, at least some network device embodiments may include non-transitory machine-readable storage media, which, for example, may be configured or designed to store program instructions, state information, and the like for performing various operations described herein. Examples of such non-transitory machine-readable storage media include, but are not limited to, magnetic media such as hard disks, floppy disks, and magnetic tape; optical media such as CD-ROMs; magneto-optical media such as optical disks, and hardware devices that are specially configured to store and perform program instructions, such as read-only memory devices (ROM), flash memory (as is common in mobile devices and integrated systems), solid state drives (SSD) and "hybrid SSD" storage drives that may combine physical components of solid state and hard disk drives in a single hardware device (as are becoming increasingly common in the art with regard to personal computers), memristor memory, random access memory (RAM), and the like. It should be appreciated that such storage means may be integral and non-removable (such as RAM hardware modules that may be soldered onto a motherboard or otherwise integrated into an electronic device), or they may be removable such as swappable flash memory modules (such as "thumb drives" or other removable media designed for rapidly exchanging physical storage devices), "hot-swappable" hard disk drives or solid state drives, removable optical storage discs, or other such removable media, and that such integral and removable storage media may be utilized interchangeably. Examples of program instructions include both object code, such as may be produced by a compiler, machine code, such as may be produced by an assembler or a linker, byte code, such as may be generated by for example a JAVA™ compiler and may be executed using a Java virtual machine or equivalent, or files containing higher level code that may be executed by the computer using an interpreter (for example, scripts written in Python, Perl, Ruby, Groovy, or any other scripting language).

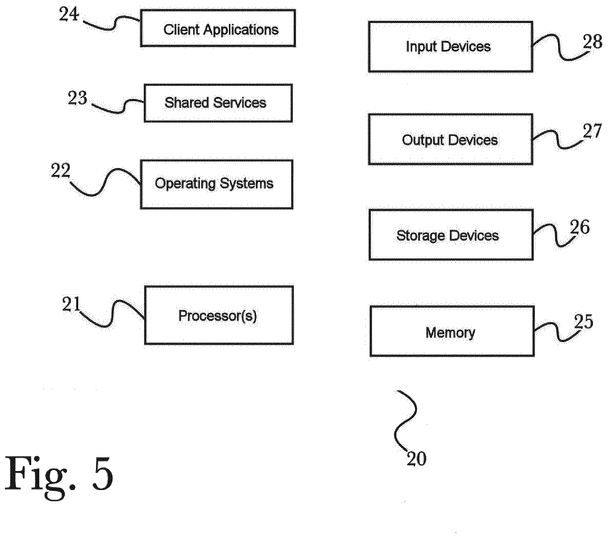

In some embodiments, systems according to the present invention may be implemented on a standalone computing system. Referring now to **Fig. 5****,** there is shown a block diagram depicting a typical exemplary architecture of one or more embodiments or components thereof on a standalone computing system. Computing device **20** includes processors **21** that may run software that carry out one or more functions or applications of embodiments of the invention, such as for example a client application **24.** Processors **21** may carry out computing instructions under control of an operating system **22** such as, for example, a version of MICROSOFT WINDOWS™ operating system, APPLE OSX™ or iOS™ operating systems, some variety of the Linux operating system, ANDROID™ operating system, or the like. In many cases, one or more shared services **23** may be operable in system **20,** and may be useful for providing common services to client applications **24.** Services **23** may for example be WINDOWS™ services, user-space common services in a Linux environment, or any other type of common service architecture used with operating system **21.** Input devices **28** may be of any type suitable for receiving user input, including for example a keyboard, touchscreen, microphone (for example, for voice input), mouse, touchpad, trackball, or any combination thereof. Output devices **27** may be of any type suitable for providing output to one or more users, whether remote or local to system **20,** and may include for example one or more screens for visual output, speakers, printers, or any combination thereof. Memory **25** may be random-access memory having any structure and architecture known in the art, for use by processors **21,** for example to run software. Storage devices **26** may be any magnetic, optical, mechanical, memristor, or electrical storage device for storage of data in digital form (such as those described above, referring to **Fig. 4**). Examples of storage devices **26** include flash memory, magnetic hard drive, CD-ROM, and/or the like.

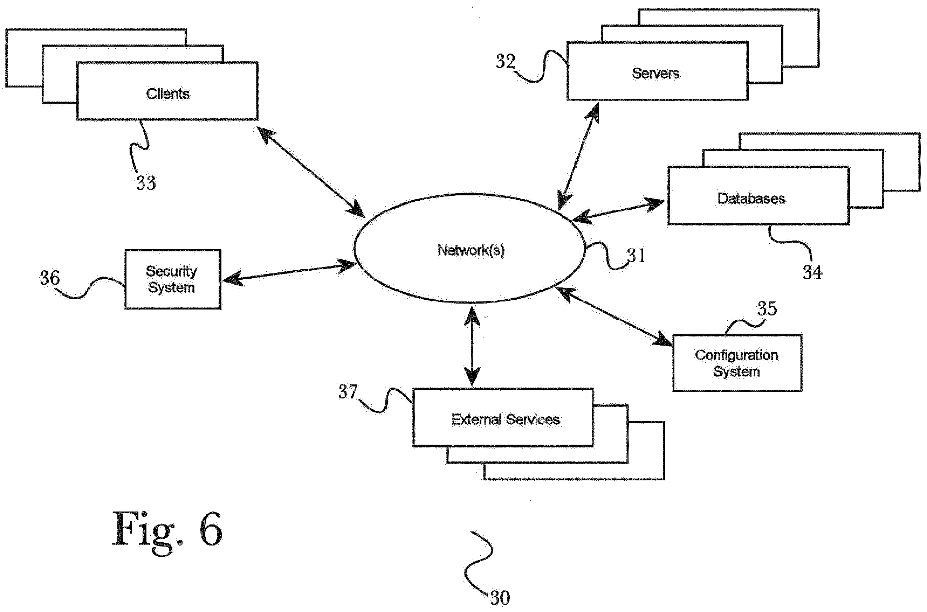

In some embodiments, systems of the present invention may be implemented on a distributed computing network, such as one having any number of clients and/or servers. Referring now to **Fig. 6****,** there is shown a block diagram depicting an exemplary architecture **30** for implementing at least a portion of a system according to an embodiment of the invention on a distributed computing network. According to the embodiment, any number of clients **33** may be provided. Each client **33** may run software for implementing client-side portions of the present invention; clients may comprise a system **20** such as that illustrated in **Fig. 5****.** In addition, any number of servers **32** may be provided for handling requests received from one or more clients **33.** Clients **33** and servers **32** may communicate with one another via one or more electronic networks **31,** which may be in various embodiments any of the Internet, a wide area network, a mobile telephony network (such as CDMA or GSM cellular networks), a wireless network (such as WiFi, WiMAX, LTE, and so forth), or a local area network (or indeed any network topology known in the art; the invention does not prefer any one network topology over any other). Networks **31** may be implemented using any known network protocols, including for example wired and/or wireless protocols.

In addition, in some embodiments, servers **32** may call external services **37** when needed to obtain additional information, or to refer to additional data concerning a particular call. Communications with external services **37** may take place, for example, via one or more networks **31.** In various embodiments, external services **37** may comprise web-enabled services or functionality related to or installed on the hardware device itself. For example, in an embodiment where client applications **24** are implemented on a smartphone or other electronic device, client applications **24** may obtain information stored in a server system **32** in the cloud or on an external service **37** deployed on one or more of a particular enterprise's or user's premises.

In some embodiments of the invention, clients **33** or servers **32** (or both) may make use of one or more specialized services or appliances that may be deployed locally or remotely across one or more networks **31.** For example, one or more databases **34** may be used or referred to by one or more embodiments of the invention. It should be understood by one having ordinary skill in the art that databases **34** may be arranged in a wide variety of architectures and using a wide variety of data access and manipulation means. For example, in various embodiments one or more databases **34** may comprise a relational database system using a structured query language (SQL), while others may comprise an alternative data storage technology such as those referred to in the art as "NoSQL" (for example, HADOOP CASSANDRA™, GOOGLE BIGTABLE™, and so forth). In some embodiments, variant database architectures such as column-oriented databases, in-memory databases, clustered databases, distributed databases, or even flat file data repositories may be used according to the invention. It will be appreciated by one having ordinary skill in the art that any combination of known or future database technologies may be used as appropriate, unless a specific database technology or a specific arrangement of components is specified for a particular embodiment herein. Moreover, it should be appreciated that the term "database" as used herein may refer to a physical database machine, a cluster of machines acting as a single database system, or a logical database within an overall database management system. Unless a specific meaning is specified for a given use of the term "database", it should be construed to mean any of these senses of the word, all of which are understood as a plain meaning of the term "database" by those having ordinary skill in the art.

Similarly, most embodiments of the invention may make use of one or more security systems **36** and configuration systems **35.** Security and configuration management are common information technology (IT) and web functions, and some amount of each are generally associated with any IT or web systems. It should be understood by one having ordinary skill in the art that any configuration or security subsystems known in the art now or in the future may be used in conjunction with embodiments of the invention without limitation, unless a specific security **36** or configuration system **35** or approach is specifically required by the description of any specific embodiment.

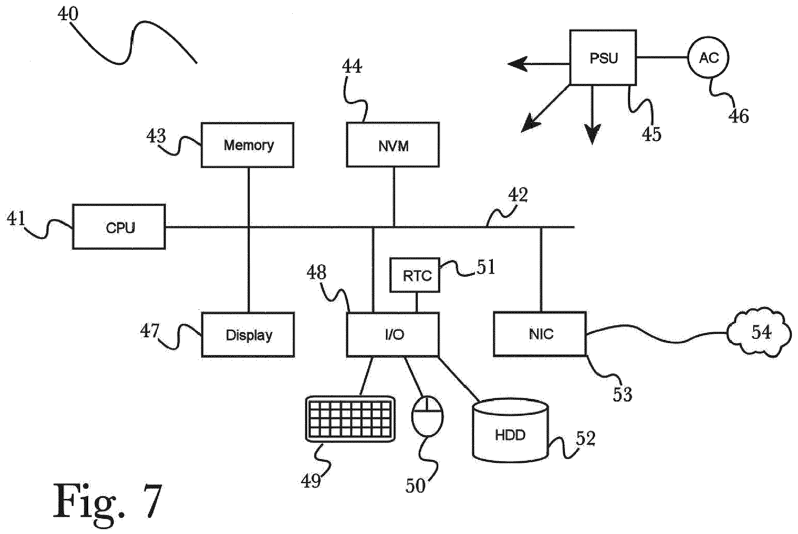

**Fig. 7** shows an exemplary overview of a computer system **40** as may be used in any of the various locations throughout the system. It is exemplary of any computer that may execute code to process data. Various modifications and changes may be made to computer system **40** without departing from the broader scope of the system and method disclosed herein. Central processor unit (CPU) **41** is connected to bus **42,** to which bus is also connected memory **43,** nonvolatile memory **44,** display **47,** input/output (I/O) unit **48,** and network interface card (NIC) **53.** I/O unit **48** may, typically, be connected to keyboard **49,** pointing device **50,** hard disk **52,** and real-time clock **51.** NIC **53** connects to network **54,** which may be the Internet or a local network, which local network may or may not have connections to the Internet. Also shown as part of system **40** is power supply unit **45** connected, in this example, to a main alternating current (AC) supply **46.** Not shown are batteries that could be present, and many other devices and modifications that are well known but are not applicable to the specific novel functions of the current system and method disclosed herein. It should be appreciated that some or all components illustrated may be combined, such as in various integrated applications, for example Qualcomm or Samsung system-on-a-chip (SOC) devices, or whenever it may be appropriate to combine multiple capabilities or functions into a single hardware device (for instance, in mobile devices such as smartphones, video game consoles, in-vehicle computer systems such as navigation or multimedia systems in automobiles, or other integrated hardware devices).

In various embodiments, functionality for implementing systems or methods of the present invention may be distributed among any number of client and/or server components. For example, various software modules may be implemented for performing various functions in connection with the present invention, and such modules may be variously implemented to run on server and/or client components.

The skilled person will be aware of a range of possible modifications of the various embodiments described above. Accordingly, the present invention is defined by the claims and their equivalents.

## Claims

1. A system (100) for case-based automated email testing, comprising:
a test database (111) configured to store and provide testing information, the testing information comprising at least a test configuration, each test case configuration comprising at least a plurality of email message information and an execution configuration; and
a test case management server (112) configured to retrieve testing information from the test database, create an email message based at least in part on the testing information, transmit at least the email message to an email server via a network (101), receive an email response from an email server (102), and configured to compare at least a plurality of email messages against at least a portion of the email message information of a test case configuration.

2. The system of claim 1, wherein the test case management server further comprises a user interface (15) configured to present information and receive user interaction, wherein the test case management server (112) directs the operation of at least an email server based at least in part on the received user interaction.

3. The system of claim 2, wherein the presented information comprises at least a portion of the testing information.

4. The system of claim 2, wherein the presented information comprises at least a portion of the email response.

5. A method (300) for case-based automated email testing, comprising the steps of:
Producing (301), using a test case management server (112) comprising at least a plurality of programming instructions stored in a memory and operating on a processor of a network-connected computing device and configured to produce a plurality of test case configurations, each test case configuration comprising at least a plurality of email message information and an execution configuration, and configured to operate an administration interface configured to receive user interaction via the network and configured to direct the operation of the test case management server based at least in part on the received interaction, and configured to direct the operation of a plurality of email servers accessible via the network based at least in part on a test case configuration, and configured to compare at least a plurality of email messages against at least a portion of the email message information of a test case configuration, a test case configuration;
directing (302) the operation of a plurality of email servers (115) based at least in part on the test case configuration;
comparing (306) a plurality of email messages against at least a portion of the email message information of a test case configuration; and
storing the results of comparison for future reference.

6. The method of claim 5, wherein the test case management server further comprises a user interface configured to present information and receive user interaction, wherein the test case management server directs the operation of at least an email server based at least in part on the received user interaction.

7. The method of claim 6, wherein the presented information comprises at least a portion of the testing information.

8. The method of claim 6, wherein the presented information comprises at least a portion of the email response.
